Europäisches Patentamt

European Patent Office

Office européen des brevets

(11) Numéro de publication: **0 239 030**
**A1**

## (12) DEMANDE DE BREVET EUROPEEN

(21) Numéro de dépôt: 87104133.1

(22) Date de dépôt: 20.03.87

(51) Int. Cl.4: **B25G 1/10** , **G01C 9/28**

(30) Priorité: 24.03.86 FR 8604170

(43) Date de publication de la demande:
30.09.87 Bulletin 87/40

(84) Etats contractants désignés:
AT BE DE ES GB GR IT LU NL SE

(71) Demandeur: **STANLEY MABO**
**Zone Industrielle Trepillot**
**F-25009 Besançon(FR)**

(72) Inventeur: **Prouteau, Bernard**
**Cidex 2 Boîte 3**
**F-25320 Montferrand(FR)**

(74) Mandataire: **Jörchel, Dietrich R.A. et al**
**c/o BUGNION S.A. 10, route de Florissant**
**Case postale 375**
**CH-1211 Genève 12 Champel(CH)**

(54) **Dispositif de protection de l'ouverture de passage de main dans un profilé creux.**

(57) Ce dispositif est constitué par une pièce mince
(3), en matériau rigide, en forme de boucle fermée,
dont le profil correspond à celui de l'ouverture (1) du
passage de main ménagée dans le profilé (2). Des
nervures transversales (4, 4') sont prévues sur sa
face extérieure. La longueur de ces nervures (4, 4')
correspond exactement à la largeur interne du profilé de façon à permettre leur engagement entre les
parois latérales (5, 5') du profilé lors du montage de
la pièce dans ladite ouverture.

Applications : niveaux, règles de maçons, etc.

Fig.5

Fig.6

EP 0 239 030 A1

## Dispositif de protection de l'ouverture de passage de main dans un profilé creux.

L'invention se rapporte à un dispositif de protection de l'ouverture de passage de main dans un profilé creux, en particulier dans un profilé creux formant le corps d'un instrument de mesure.

Certains instruments de mesure ou de vérification, en particulier les niveaux à eau, sont formés par un corps en profilé creux. Pour permettre une bonne préhension de ces instruments, il est connu de prévoir une ou deux ouvertures de passage de main. Ces ouvertures sont habituellement protégées afin d'éviter que l'utilisateur ne se blesse les doigts au contact des arêtes plus ou moins vives qu'elles peuvent présenter, et également pour empêcher que des éléments étrangers ne s'introduisent à l'intérieur du profilé.

Différents agencements ont déjà été proposés pour parvenir à cette protection. Par exemple, selon le brevet FR 2 486 854, il est prévu deux coquilles symétriques qui sont introduites dans l'ouverture, de part et d'autre du profilé, et qui sont munies de moyens de fixation entre elles, formés notamment par un système à rainure et à languette. Ce genre de dispositif est cependant relativement compliqué, tant du point de vue de sa fabrication que de son montage, ce qui augmente le prix de revient des instruments.

La présente invention se propose de réaliser un dispositif très simple et peu coûteux.

A cet effet, le dispositif selon l'invention est caractérisé par le fait qu'il est constitué par une pièce mince, en matériau rigide, en forme de boucle fermée, dont le profil correspond à l'ouverture du passage de main ménagée dans le profilé, ladite pièce étant munie sur sa face extérieure de nervures transversales dont la longueur correspond à la largeur interne du profilé, lesdites nervures étant destinées à s'engager entre les deux parois latérales du profilé une fois la pièce introduite dans ladite ouverture, grâce à l'élasticité de ladite pièce.

Une telle pièce de protection est très facile à réaliser par moulage. De plus, son montage dans l'ouverture du profilé est très rapide et simple et peut avantageusement être effectué automatiquement, ce qui permet d'augmenter le rendement de fabrication de ces instruments et par conséquent de diminuer leur prix de revient.

D'autres avantages ressortiront de la description faite à titre d'exemple non limitatif, d'une forme d'exécution du dispositif, et en référence aux dessins annexés dans lesquels :

La figure 1 est une vue de profil de la pièce de protection.

La figure 2 en est une vue de dessus.

La figure 3 est une vue en coupe selon l'axe III-III de la figure 1.

La figure 4a montre une vue en coupe de la pièce dans sa phase d'introduction dans l'ouverture de passage de main.

La figure 4b montre la même vue de la pièce introduite dans ladite ouverture.

La figure 5 montre une vue en perspective du profilé lors de la phase de montage de la pièce dans l'ouverture.

La figure 6 est la même vue du profilé avec la pièce complètement montée dans l'ouverture.

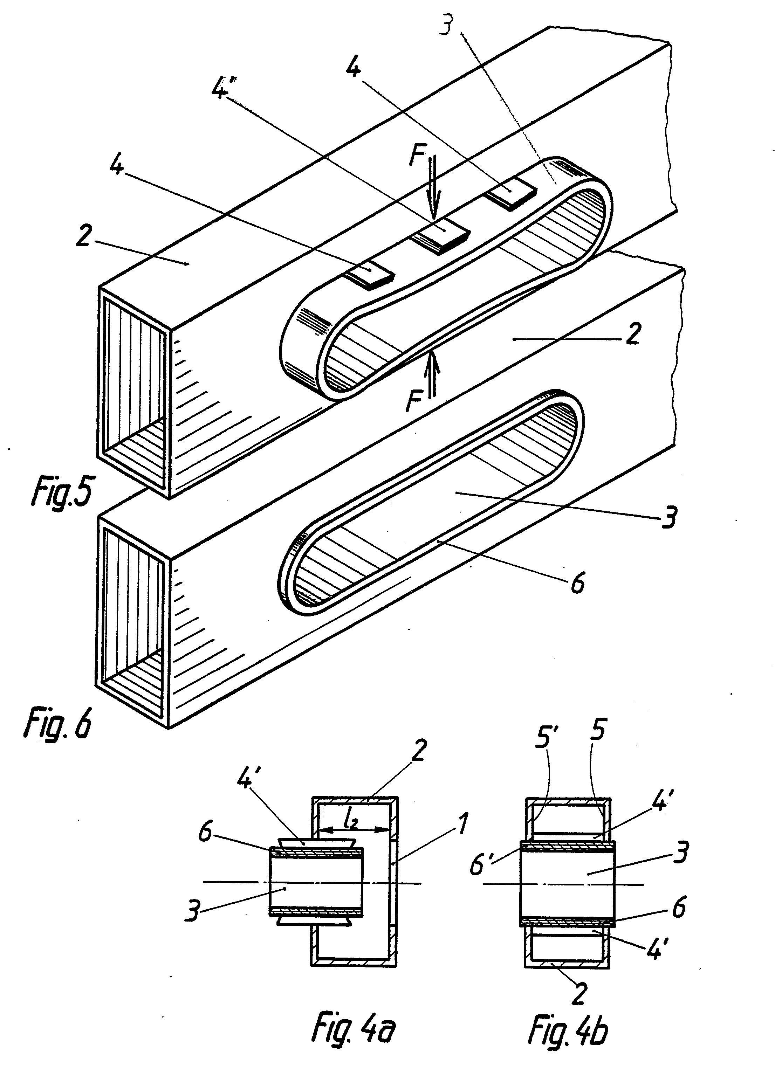

Le dispositif de protection de l'ouverture 1 de passage de main dans un profilé creux 2 (figures 5 et 6) est formé par une pièce unique 3, mince, en matériau rigide mais possédant une certaine élasticité lui permettant d'être légèrement déformé temporairement, par exemple en matière plastique ou toute autre matière similaire. Cette pièce 3 a la forme d'une boucle fermée dont le profil correspond à l'ouverture 1 ménagée dans le profilé 2. Dans la forme d'éxécution représentée, cette ouverture 1 est oblongue, avec des extrémités arrondies.

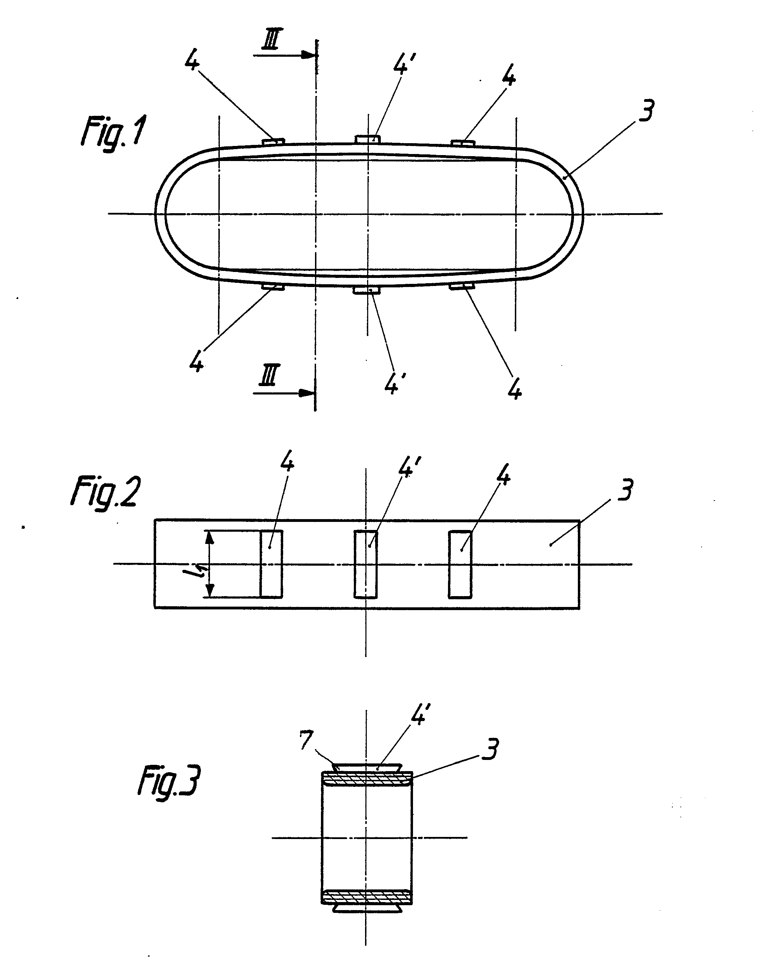

La pièce 3 est munie sur sa face extérieure de plusieurs nervures transversales 4, 4' faisant saillie, et dont la longueur l1 correspond exactement à la largeur interne l2 du profilé creux 2. Comme illustré figure 1, il est prévu trois nervures sur chaque face plane de la pièce 3, les deux nervures centrales 4' étant légèrement plus hautes que les quatre nervures d'extrémité 4. D'autre part, les extrémités 7 de ces nervures 4, 4' présentent préférablement un petit angle de dépouille, comme illustré figure 3. Par ailleurs, selon une forme préférée de l'invention et comme on peut le voir sur la figure 1, la paroi de la pièce 3 au niveau des nervures n'est pas absolument plane comme celle de la paroi correspondante de l'ouverture 1 dans le profilé, mais légèrement bombée pour augmenter son élasticité et sa retenue dans le profilé ainsi que cela va être décrit ci-après.

Pour le montage de la pièce de protection 3 dans l'ouverture 1 du profilé 2, on procède de la manière illustrée figures 5 et 4a, à savoir on introduit la pièce 3 latéralement dans l'ouverture 1 en la pinçant légèrement en son centre suivant les flèches F afin de faire passer les nervures 4, 4' dans ladite ouverture 1. On force la pièce 3 dans cette ouverture 1 jusqu'à ce que les nervures 4, 4' arrivent dans l'espace creux à l'intérieur du profilé, (Figure4b) où elles se libèrent grâce à l'élasticité de la pièce 3 qui reprend sa forme initiale, et les extrémités 7 des nervures 4, 4' s'engagent par déclic contre les faces latérales internes 5, 5' du profilé creux 2. A ce moment, la pièce 3 se trouve bloquée dans le profilé 2 et donc fixée sans qu'il soit nécessaire de prévoir d'autres moyens de retenue ou de fixation, tels que de la colle ou autre moyen. Du fait que cette pièce 3 est relativement rigide, les nervures 4, 4' restent emboîtées dans le profilé sans risque de relâchement.

Ce montage peut être avantageusement effectué mécaniquement à l'aide d'une machine appropriée qui pince les deux parois opposées de la pièce 3, ce qui peut être automatisé dans une chaine de montage.

Selon une forme d'éxécution préférée, illustrée figures 4a et 4b, la largeur de la pièce 3 est avantageusement légèrement supérieure à la largeur extérieure du profilé 2. Ainsi, une fois la pièce 3 emboîtée dans le profilé, ses extrémités 6, 6' forment un petit rebord dépassant les parois du profilé 2. Cependant, ce dépassement n'est pas obligatoire, et la largeur de la pièce 3 pourrait correspondre exactement à la largeur extérieure du profilé de façon que ses extrémités affleurent les parois latérales du profilé.

La pièce de protection 3 peut être fabriquée par moulage par injection d'une matière plastique, ce qui lui permet également d'avoir un prix de revient très avantageux.

Ce dispositif de protection peut s'appliquer à tout instrument de mesure ou de vérification muni d'un passage de main ou autre orifice facilitant son maniement, notamment aux niveaux, aux règles de maçon aux calibres, etc.

**Revendications**

1. Dispositif de protection de l'ouverture de passage de main dans un profilé creux, en particulier dans un profilé creux formant le corps d'un instrument de mesure, caractérisé par le fait qu'il est constitué par une pièce mince (3), en matériau rigide, en forme de boucle fermée, dont le profil correspond à l'ouverture (1) du passage de main ménagée dans le profilé (2), ladite pièce (3) étant munie sur sa face extérieure de nervures transversales (4, 4') dont la longueur correspond à la largeur interne du profilé (2), lesdites nervures étant destinées à s'engager entre les deux parois latérales (5, 5') du profilé une fois la pièce (3) introduite dans ladite ouverture, grâce à l'élasticité de ladite pièce.

2. Dispositif selon la revendication 1, caractérisé par le fait que la pièce (3) a une forme oblongue aux extrémités arrondies et que les nervures (4, 4') sont formées sur ses parois latérales planes.

3. Dispositif selon la revendication 2, caractérisé par le fait qu'il est prévu trois nervures sur chaque paroi latérale de la pièce (3), et que la nervure centrale (4') est plus haute que les deux nervures d'extrémité (4).

4. Dispositif selon l'une des revendications précédentes, caractérisé par le fait que la largeur de la pièce (3) correspond à la largeur externe du profilé.

5. Dispositif selon l'une des revendications 1 à 4, caractérisé par le fait que la largeur de la pièce (3) est supérieure à la largeur externe du profilé de sorte qu'une fois montée dans le profilé, ses extrémités forment un rebord dépassant des faces latérales du profilé.

6. Dispositif selon l'une des revendications précédentes, caractérisé par le fait que le profil de la pièce (3) au niveau des nervures (4, 4') est légèrement plus grand que celui de l'ouverture (1).

7. Dispositif selon l'une des revendications précédentes, caractérisé par le fait qu'il est prévu un angle de dépouille aux extrémités (7) des nervures (4, 4').

Fig.1

Fig.2

Fig.3

Fig.5

Fig. 6

Fig. 4a

Fig. 4b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | NL-A-7 906 528 (WAVIN) <br> * Page 3, lignes 25-27; page 4, lignes 23-26; revendications 1-3,5,7,9; figures 1-5 * | 1-8 | B 25 G 1/10 <br> G 01 C 9/28 |
| | --- | | |
| A | DE-A-2 152 110 (NEDERLANDSE ORGANISATIE VOOR TOEGEPAST NATUURWETENSCHAPPELIJK ONDERZOEK) <br> * Page 8, lignes 27-31; revendication 4; figure 5 * | 1 | |
| | --- | | |
| A | GB-A-2 080 529 (STABILA) <br> * Page 1, lignes 50-63; figures 1,2 * & FR-A-2 486 854 (Cat. D) | 1,2 | |
| | ----- | | |

| DOMAINES TECHNIQUES RECHERCHES (Int. Cl.4) |
|---|
| B 25 G <br> G 01 C <br> B 65 D |

Le présent rapport de recherche a été établi pour toutes les revendications

| Lieu de la recherche | Date d'achèvement de la recherche | Examinateur |
|---|---|---|
| LA HAYE | 17-06-1987 | KUHN E.F.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82